# EUROPÄISCHE PATENTSCHRIFT

(11) **EP 0 975 813 B1**
(45) Veröffentlichungstag und Bekanntmachung des Hinweises auf die Patenterteilung: **17.10.2001**
(21) Anmeldenummer: 98922677.4
(22) Anmeldetag: 09.04.1998
(51) Int. Cl.: C21B 13/14

(54) **VERFAHREN ZUR HERSTELLUNG VON FLÜSSIGEM ROHEISEN ODER FLÜSSIGEN STAHLVORPRODUKTEN**
PROCESS FOR PRODUCING LIQUID PIG IRON OR LIQUID METALLURGICAL PREPARATIONS
PROCEDE DE PRODUCTION DE FONTE BRUTE OU DE PREPARATIONS METALLURGIQUES LIQUIDES

(30) Priorität: 16.04.1997 AT 65997
(43) Veröffentlichungstag der Anmeldung: 02.02.2000
(73) Patentinhaber: Deutsche Voest-Alpine Industrieanlagenbau GmbH, 40219 Düsseldorf (DE)
(72) Erfinder: GRÜNBACHER, Herbert, A-4502 St. Marien (AT); SCHREY, Günter, A-4020 Linz (AT)
(74) Vertreter: VA TECH Patente GmbH
(86) Internationale Anmeldenummer: EP9802086
(87) Internationale Veröffentlichungsnummer: WO9846800

(56) Entgegenhaltungen:
- EP-A- 0 012 363
- EP-A- 0 623 684
- WO-A-96/34120

## Beschreibung

Die Erfindung betrifft ein Verfahren zur Herstellung von flüssigem Roheisen oder flüssigen Stahlvorprodukten aus von Eisenerz, vorzugsweise in Stück- und/oder Pelletform, und gegebenenfalls Zuschlägen gebildeten Einsatzstoffen, wobei die Einsatzstoffe in einer Reduktionszone zu Eisenschwamm direkt reduziert werden, der Eisenschwamm in eine Einschmelzvergasungszone chargiert und dort unter Zufuhr von Kohlenstoffträgern und sauerstoffhältigem Gas erschmolzen wird, wobei ein CO- und H₂-hältiges Reduktionsgas erzeugt, aus der Einschmelzvergasungszone abgezogen und in die Reduktionszone eingeleitet, dort umgesetzt und als Topgas abgezogen wird, und wobei das Topgas einer Wäsche unterzogen wird und die dabei abgeschiedenen Schlämme zumindest teilweise agglomeriert werden, sowie eine Anlage zur Durchführung des Verfahrens.

Ein Verfahren dieser Art ist beispielsweise aus der AT-B - 376 241 bekannt. Hierbei werden Feststoffpartikel aus dem Reduktionsgas sowie aus dem aus der Reduktionszone austretenden Topgas in Zyklonen abgeschieden und mit Bindemittel, wie Eisenoxidstaub, versetzt, heiß brikettiert und der Einschmelzvergasungszone zugeführt. Diese Lösung ist jedoch im Hinblick auf die Investitions- und Betriebskosten aufwendig. Weiters muß infolge des Einbringens von Eisenoxiden in die Einschmelzvergasungszone Reduktionsarbeit geleistet werden, um das Eisenoxid zu reduzieren, wodurch der Einschmelzvergasungszone für den Einschmelzvorgang benötigte Energie entzogen wird.

Aus der AT-B - 400 725 ist bekannt, Schlämme, die beim Waschen des aus der Einschmelzvergasungszone austretenden Reduktionsgases sowie des aus der Reduktionszone austretenden Topgases gebildet werden, zu entwässern und zu granulieren und schließlich wieder in Form von Granulaten in die Einschmelzvergasungszone einzusetzen. Hierbei ist ebenfalls in der Einschmelzvergasungszone Reduktionsarbeit zu leisten, wodurch bei sehr großen Granulatmengen der Einschmelzvergasungszone zu hohe Energiemengen entzogen werden, was zu einer Minderung der Reduktanten und damit zu Störungen im Prozeß führen kann.

Aus der DE-A - 41 23 626 ist bekannt, Hüttenreststoffe zu agglomerieren und die Agglomerate in den oberen Möllerbereich eines Schmelzaggregates einzubringen, wobei eine Vorwärmung und Trocknung der Agglomerate in diesem Möllerbereich des Schmelzaggregates erfolgt. Der Möller durchsetzt das Schmelzaggregat nach dem Gegenstromprinzip, bis er in den unteren Bereich des Schmelzaggregates gelangt, wo er geschmolzen wird. Dieses bekannte Verfahren ist insofern energieaufwendig, als auch metallische Abfall- oder Reststoffe im Schmelzaggregat getrocknet und gesintert werden und das Schmelzaggregat durchwandern müssen, wodurch der im Schmelzaggregat stattfindende Prozeß negativ beeinflußt wird.

Weiters ist aus der EP-A - 0 623 684 ein Verfahren bekannt, bei welchem Abfall- und Reststoffe mit Kohlestaub und Eisen in metallischer und oxidischer Form nach ihrer chemischen Zusammensetzung in drei Gruppen getrennt gesammelt werden, u.zw. soll die erste Gruppe hauptsächlich Eisen in oxidischer Form, die zweite Gruppe hauptsächlich Eisen in metallischer Form und die dritte Gruppe hauptsächlich kohlenstoffhältige Stoffe enthalten. Die Verwertung erfolgt, indem die Stoffe der ersten Gruppe in die Reduktionszone und die der zweiten und dritten Gruppe zugehörenden Stoffe direkt in die Einschmelzvergasungszone eingesetzt werden. Die bei diesem Verfahren aus dem Topgas der Reduktionszone abgeschiedenen Stäube werden nur in die Einschmelzvergasungszone rezirkuliert. Hieraus resultiert eine Beeinflussung des Einschmelz-Vergasungsvorganges, da der Einschmelzvergasungszone zum Erwärmen und Aufschmelzen der Reststoffe Energie entzogen wird.

Die Erfindung stellt sich die Aufgabe, ein Verfahren der eingangs beschriebenen Art dahingehend weiterzuentwickeln, daß es in einfacher und effizienter Weise möglich ist, die hierbei anfallenden Schlämme vollständig und unter geringstmöglichem Energieaufwand in das Verfahren zu rezirkulieren, wobei die mit dem Einbringen der Schlämme in die Einschmelzvergasungszone verbundenen Nachteile, d.h. eine in der Einschmelzvergasungszone zu leistende erhöhte Reduktionsarbeit sowie Wärmeverluste aus der Erwärmung des eingebrachten Gutes, vermieden werden sollen.

Diese Aufgabe wird erfindungsgemäß dadurch gelöst, daß das Agglomerat (das aus zumindest einer Teilmenge der beim Waschen des Topgases der Reduktionszone anfallenden Schlämme gebildet wurde) in die Reduktionszone, vorzugsweise ausschließlich in die Reduktionszone, rezirkuliert wird.

Gemäß einer bevorzugten Ausführungsform wird zumindest eine Teilmenge des aus der Einschmelzvergasungszone austretenden Reduktionsgases ebenfalls gewaschen, die dabei anfallenden Schlämme werden zumindest teilweise agglomeriert und das so gebildete Agglomerat in die Reduktionszone rezirkuliert.

Vorteilhaft werden die beim Waschen des Reduktionsgases aus der Einschmelzvergasungszone anfallenden, zu agglomerierenden Schlämme gemeinsam mit den beim Waschen des Topgases aus der Reduktionszone anfallenden, zu agglomerierenden Schlämmen weiterbehandelt. Dadurch können Investitionskosten minimiert werden.

Gegebenenfalls wird das gereinigte Topgas aus der Reduktionszone nach dem Waschen einer CO₂-Eliminierung unterzogen und als zumindest weitgehend CO₂-freies Reduktionsgas mindestens einer weiteren Reduktionszone zur Direktreduktion von Metallerz, insbesondere von Eisenerz oder Pellets, zugeführt, nach Umsetzung mit dem Metallerz in der weiteren Reduktionszone als Exportgas abgezogen und in einem Wäscher gereinigt, und die beim Waschen des Exportgases aus der weiteren Reduktionszone anfallenden Schlämme werden zumindest teilweise agglomeriert, und das so gebildete Agglomerat wird in die erste Reduktionszone rezirkuliert. Somit können auch die beim Waschen des Exportgases der weiteren Reduktionszone anfallenden Schlämme effizient wiederverwertet werden.

Vorteilhaft werden dabei die beim Waschen des Exportgases aus der weiteren Reduktionszone anfallenden, zu agglomerierenden Schlämme gemeinsam mit den beim Waschen des Topgases aus der ersten Reduktionszone anfallenden und/oder gemeinsam mit den beim Waschen des Reduktionsgases aus der Einschmelzvergasungszone anfallenden, zu agglomerierenden Schlämmen weiterbehandelt.

Die zu agglomerierenden Schlämme werden gemäß einer bevorzugten Ausführungsform des erfindungsgemäßen Verfahrens zunächst auf einen Restfeuchtegehalt entwässert. Vorteilhaft werden den Schlämmen zum Agglomerieren, vorzugsweise in einem zweistufigen kontinuierlichen Verfahren, oxidische Stäube, gegebenenfalls Kohlestaub und Branntkalk zugesetzt.

Die so gebildeten Granulate bestehen aus folgenden Hauptkomponenten (zu etwa gleichen Teilen):
- Eisen und Eisenoxide
- Kalziumhydroxid
- Kohlenstoff
- Kohlenaschebestandteile wie Al₂O₃, SiO₂, etc.

Es ist bekannt, daß bei der Reduktion von Fe₂O₃ und FeO mit CO in einer Reduktionszone Wärme erzeugt wird, und es hat sich gezeigt, daß es in der Reduktionszone durch einen hierdurch bedingten Anstieg der Temperatur zu einer Überhitzung kommen kann. Als Folge tritt ein Zusammenbacken der Reduktionsprodukte - bekannt als Clusterbildung - und damit eine Störung des Reduktionsbetriebes ein.

Durch die erfindungsgemäße Vorgangsweise kann dies vermieden werden, da bei der Einsetzung der obigen Granulate in die Reduktionszone in dieser folgende vorteilhafte Prozesse ablaufen:
- Durch den Gehalt an Kohlenstoff in den Granulaten wird die Boudouard-Reaktion, C + CO₂ → 2 CO, welche wärmeverbrauchend abläuft, gefördert.
- Der Gehalt an Kalziumhydroxid, welches aus zugesetztem CaO gebildet wird, löst eine weitere wärmeverbrauchende Reaktion aus (Rückbildung von CaO).

Beide wärmeverbrauchenden Reaktionen ermöglichen eine gezielte Begrenzung der Temperatur in der Reduktionszone während der Reduktion des Erzes. Als Folge wird ein Zusammenbacken der Reduktionsprodukte (Clusterbildung) verhindert, weiters wird die Topgasmenge und -qualität erhöht.

Aus der DE-A - 41 23 626 ist bekannt, Filterstäube aus dem Abgas des Schmelzaggregates in das Schmelzaggregat zu rezirkulieren. Diese Filterstäube enthalten jedoch nicht die oben angeführten Komponenten, d.h. die obigen vorteilhaften Prozesse im Schmelzaggregat können nicht stattfinden.

Gemäß einer weiteren bevorzugten Ausführungsform des erfindungsgemäßen Verfahrens werden oxidische Stäube aus der Gießhallenentstaubung eines Hüttenwerkes, insbesondere aus einer Anlage zur Durchführung des Verfahrens bzw. aus der Entstaubungsanlage eines Elektroofens eines der Einschmelzvergasungszone und/oder weiteren Reduktionszone nachgeschalteten Stahlwerks, eingesetzt.

Die Agglomerate bzw. Granulate werden zweckmäßig vor dem Rezirkulieren in die Reduktionszone getrocknet.

Eine Anlage zur Herstellung von flüssigem Roheisen oder flüssigen Stahlvorprodukten aus von Eisenerz, vorzugsweise in Stück- und/oder Pelletform, und gegebenenfalls Zuschlägen gebildeten Einsatzstoffen, mit einem Reduktionsreaktor für Eisenerz, einem Einschmelzvergaser, einer den Einschmelzvergaser mit dem Reduktionsreaktor verbindenden Zuleitung für ein im Einschmelzvergaser gebildetes Reduktionsgas, einer den Reduktionsreaktor mit dem Einschmelzvergaser verbindenden Förderleitung für das im Reduktionsreaktor gebildete Reduktionsprodukt, mit einer vom Reduktionsreaktor ausgehenden, mit einem Wäscher versehenen Topgas-Ableitung, mit in den Einschmelzvergaser mündenden Zuleitungen für Kohlenstoffträger und sauerstoffhältige Gase und einem am Einschmelzvergaser vorgesehenen Abstich für Roheisen und Schlacke und mit einer aus dem Wäscher zu einer Einrichtung zum Agglomerieren von zumindest einem Teil der im Wäscher anfallenden Schlämme führenden Schlammableitung ist dadurch gekennzeichnet, daß die Einrichtung zum Agglomerieren der Schlämme leitungsmäßig mit dem Reduktionsreaktor verbunden ist.

Gemäß einer bevorzugten Ausführungsform ist in der in den Reduktionsreaktor mündenden Reduktionsgas-Zuleitung ein zweiter Wäscher für zumindest eine Teilmenge des Reduktionsgases vorgesehen, von dem eine Schlammableitung zu einer Einrichtung zum Agglomerieren von zumindest einem Teil der im zweiten Wäscher anfallenden Schlämme führt, welche Einrichtung leitungsmäßig mit dem Reduktionsreaktor verbunden ist.

Vorteilhaft ist die dem zweiten Wäscher zugeordnete Schlammableitung leitungsmäßig mit der dem ersten Wäscher zugeordneten Schlammableitung verbunden.

Gegebenenfalls ist ein weiterer Reduktionsreaktor zur Aufnahme von Metallerz, insbesondere von weiterem Eisenerz oder Pellets, mit einer Reduktionsgas-Zuleitung, mit einer mit einem dritten Wäscher versehenen Exportgas-Ableitung und mit einer Austragsvorrichtung für das in diesem Reduktionsreaktor gebildete Reduktionsprodukt vorgesehen, wobei die Topgas-Ableitung des ersten Reduktionsreaktors in eine CO₂-Eliminierungsanlage mündet, von der die Reduktionsgas-Zuleitung des weiteren Reduktionsreaktors ausgeht und in den weiteren Reduktionsreaktor mündet und wobei eine Schlammableitung aus dem dritten Wäscher zu einer Einrichtung zum Agglomerieren von zumindest einem Teil der im dritten Wäscher anfallenden Schlämme führt, welche Einrichtung leitungsmäßig mit dem ersten Reduktionsreaktor verbunden ist.

Gemäß einer bevorzugten Ausführungsform ist die dem dritten Wäscher zugeordnete Schlammableitung leitungsmäßig mit der dem ersten und/oder zweiten Wäscher zugeordneten Schlammableitung verbunden.

Vorzugsweise führt die dem ersten, zweiten und/oder dritten Wäscher zugeordnete Schlammableitung vor der Einrichtung zum Agglomerieren der Schlämme zu einer Schlammentwässerungseinrichtung, die zweckmäßig als Dekanterzentrifuge ausgebildet ist.

Die Einrichtung zum Agglomerieren der Schlämme ist zweckmäßig als zweistufige Misch- und Granuliereinrichtung ausgebildet und gemäß einer bevorzugten Ausführungsform über eine Trocknungseinrichtung mit dem ersten Reduktionsreaktor leitungsmäßig verbunden.

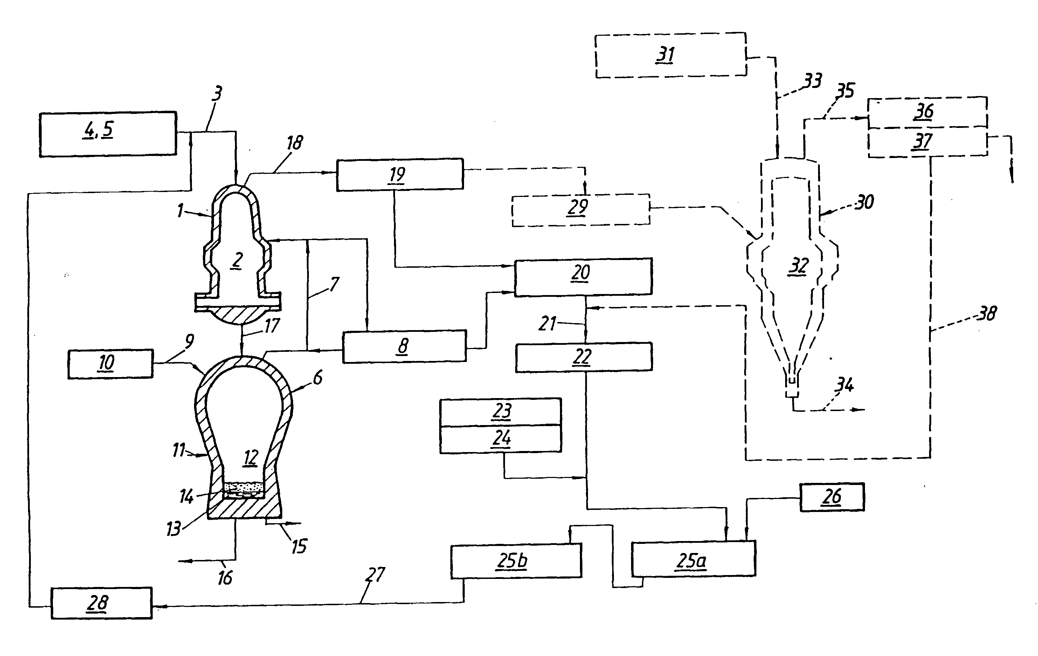

Die Erfindung ist nachfolgend anhand eines in der Zeichnung dargestellten Ausführungsbeispiels näher erläutert, wobei die Zeichnung in schematischer Darstellung eine bevorzugte Ausführungsform der Anlage zur Durchführung des erfindungsgemäßen Verfahrens veranschaulicht.

In einen als Schachtofen 1 ausgebildeten Reduktionsreaktor, d.h. in dessen Festbett-Reduktionszone 2, werden von oben über eine Zuleitung 3 stückige eisenoxidhältige Einsatzstoffe 4, wie Erz, gegebenenfalls zusammen mit ungebrannten Zuschlägen 5, chargiert. Der Schachtofen 1 steht mit einem Einschmelzvergaser 6 in Verbindung, in dem aus Kohlenstoffträgern und sauerstoffhältigem Gas ein Reduktionsgas erzeugt wird, welches über eine Zuleitung 7 dem Schachtofen 1 zugeführt wird und diesen im Gegenstrom zu den Einsatzstoffen 4 durchströmt. In der Zuleitung 7 ist eine Gasreinigungs- und Gaskühlungseinrichtung 8, die als Wäscher ausgebildet ist, vorgesehen, durch die zumindest ein Teilstrom des Reduktionsgases zwecks Temperatureinstellung hindurchgeleitet wird.

Der Einschmelzvergaser 6 weist eine Zuleitung 9 für feste, stückige Kohlenstoffträger 10 und Zuleitungen 11 für sauerstoffhältige Gase auf. Im Einschmelzvergaser 6 sammelt sich unterhalb der Einschmelzvergasungszone 12 schmelzflüssiges Roheisen 13 und schmelzflüssige Schlacke 14, die über je einen eigenen Abstich 15, 16 getrennt abgestochen werden.

Die im Schachtofen 1 in der Reduktionszone 2 zu Eisenschwamm teil- und/oder fertigreduzierten stückigen Einsatzstoffe werden dem Einschmelzvergaser 6 über eine oder mehrere Förderleitungen 17 zugeführt, beispielsweise mittels Austragsschnecken. An den oberen Teil des Schachtofens 1 schließt eine Ableitung 18 für das in der Reduktionszone 2 entstehende Topgas an. Dieses Topgas wird zwecks Befreiung von Staub und Wasserdampf einer Gasreinigungseinrichtung 19, die ebenfalls als Wäscher ausgebildet ist, zugeleitet.

Die im Wäscher 19 anfallenden Schlämme werden gemeinsam mit den Schlämmen, die im Wäscher 8 beim Waschen des dem Schachtofen 1 zugeleiteten Reduktionsgases anfallen, einem Eindicker 20 zugeleitet. Vom Eindicker 20 werden die eingedickten Schlämme über eine Förderleitung 21 einer Schlammtrocknungseinrichtung 22, z.B. einer Dekanterzentrifuge, zugeführt.

Die entwässerten Schlämme werden mit trockenen oxidischen Stäuben 23, wie Erzabrieb und Gießhallenstäuben. und Kohlestaub 24 vermischt. Dieses Gemisch aus Schlämmen und Stäuben wird anschließend einer Misch- und Granuliereinrichtung 25a, 25b zugeführt, in der zur weiteren Herabsetzung der Restfeuchte den entwässerten Schlämmen gebrannter Kalk 26 zugefügt wird. In der Misch- und Granuliereinrichtung 25a, 25b erfolgt eine Granulierung des Gemischs aus Schlämmen, Stäuben 23, 24 und gebranntem Kalk 26 zu einem Granulat zweistufig. Beim zweistufigen kontinuierlichen Granulationsverfahren erfolgen die Verfahrensschritte Mischen und Granulation in voneinander getrennten Reaktoren, welche unterschiedliche Größen haben, mit separaten Antrieben ausgerüstet sind und auf die Aufgaben Mischen einserseits und Granulieren andererseits abgestimmte Misch- und Granulierwerkzeuge aufweisen.

Das Granulat wird über eine Förderleitung 27 einer Trocknungseinrichtung 28 zugeführt und anschließend über die Zuleitung 3 für die stückigen eisenoxidhaltigen Einsatzstoffe 4 und die Zuschläge 5 in den Schachtofen 1 eingebracht. Die Trocknung der Granulate erfolgt vorzugsweise kontinuierelich in einem dritten Aggregat nach der Granulation. Dieses Aggregat kann mit einem beheizbaren Doppelmantel ausgeführt sein.

Gemäß einer weiteren bevorzugten Ausführungsform des Verfahrens (die in der Zeichnung mit strichlierten Linien veranschaulicht ist) wird das im Wäscher 19 gereinigte Topgas einer CO₂-Eliminierung, beispielsweise in einem CO₂-Wäscher 29 oder einem Reformer, unterworfen und steht sodann als Reduktionsgas einem weiteren Reduktionsreaktor 30 zur Aufnahme von Metallerz - beim dargestellten Ausführungsbeispiel zur Aufnahme von Eisenerz oder Pellets 31 - zur Verfügung. Gegebenenfalls wird vor Einleitung dieses Reduktionsgases in den weiteren Reduktionsreaktor dieses einer Aufheizung unterzogen, was im Ausführungsbeispiel jedoch nicht näher dargestellt ist.

Der weitere Reduktionsreaktor 30 ist ebenfalls als Schachtofen ausgebildet und arbeitet wie der erste Schachtofen 1 im Gegenstromprinzip. In diesem zweiten Schachtofen 30 wird Eisenerz in Stück- und/oder Pelletform ebenfalls in einer Festbett-Reduktionszone 32 zu Eisenschwamm direktreduziert. Die Erzzuleitung ist mit 33 und die Eisenschwamm-Austragsvorrichtung mit 34 bezeichnet.

Das aus dem zweiten Reduktionsreaktor 30 über die Leitung 35 abgezogene Exportgas wird ebenfalls einer Reinigung und Kühlung in einem Exportgaswäscher 36 unterzogen, um es von Staubpartikeln zu säubern und den Wasserdampfgehalt zu erniedrigen, worauf es einer weiteren Verwendung zugeführt werden kann.

Die im Exportgaswäscher 36 anfallenden Schlämme werden in einem Eindicker 37 eingedickt und über eine Leitung 38 der Förderleitung 21 zugeführt.

Auf diese Weise gelingt es, sämtliche Schlämme, die beim Waschen sowohl des Topgases aus der Reduktionszone 2 als auch des Reduktionsgases aus der Einschmelzvergasungszone 12 und gegebenenfalls des Exportgases aus der weiteren Reduktionszone 32 anfallen, nutzbringend in der Weise zu verwerten, daß die aus den Schlämmen gebildeten Agglomerate der Reduktionszone 2 zugeführt werden und den in der Reduktionszone 2 ablaufenden Prozeß vorteilhaft beeinflussen. Durch den in den Agglomeraten stets vorhandenen Kohlenstoff wird nämlich in der Reduktionszone 2 der Ablauf der wärmeverbrauchenden Boudouard-Reaktion, C + CO₂ → 2 CO, gefördert, wodurch es gelingt, die Temperatur in der Reduktionszone 2 gezielt zu begrenzen und ein Zusammenbacken der Reduktionsprodukte zu verhindern.

Die Erfindung beschränkt sich nicht auf das in der Zeichnung dargestellte Ausführungsbeispiel, sondern umfaßt auch weitere Ausführungsformen. Beispielsweise können die in den Wäschern 8, 19 und 36 abgeschiedenen Schlämme jeweils getrennt über separate Förderleitungen der Reduktionszone 2 zugeführt werden, und zwar gegebenenfalls nach Entwässern in separaten Schlammentwässerungseinrichtungen bzw. nach Agglomerieren in separaten Agglomerierungseinrichtungen. Auf diese Weise können die in ihrer chemischen Zusammensetzung gegebenenfalls unterschiedlichen Schlämme vor dem Einbringen in die Reduktionszone 2 gezielt behandelt werden.

## Patentansprüche

1. Verfahren zur Herstellung von flüssigem Roheisen (13) oder flüssigen Stahlvorprodukten aus von Eisenerz (4), vorzugsweise in Stück- und/oder Pelletform, und gegebenenfalls Zuschlägen (5) gebildeten Einsatzstoffen, wobei die Einsatzstoffe in einer Reduktionszone (2) zu Eisenschwamm direkt reduziert werden, der Eisenschwamm in eine Einschmelzvergasungszone (12) chargiert und dort unter Zufuhr von Kohlenstoffträgem (10) und sauerstoffhältigem Gas erschmolzen wird, wobei ein CO- und H₂-hältiges Reduktionsgas erzeugt, aus der Einschmelzvergasungszone (12) abgezogen und in die Reduktionszone (2) eingeleitet, dort umgesetzt und als Topgas abgezogen wird, und wobei das Topgas einer Wäsche unterzogen wird und die dabei abgeschiedenen Schlämme zumindest teilweise agglomeriert werden, **dadurch gekennzeichnet, daß** das so gebildete Agglomerat in die Reduktionszone (2), vorzugsweise ausschließlich in die Reduktionszone (2), rezirkuliert wird.

2. Verfahren nach Anspruch 1, **dadurch gekennzeichnet, daß** zumindest eine Teilmenge des aus der Einschmelzvergasungszone (12) austretenden Reduktionsgases gewaschen wird, die dabei anfallenden Schlämme zumindest teilweise agglomeriert werden und das so gebildete Agglomerat in die Reduktionszone (2) rezirkuliert wird.

3. Verfahren nach Anspruch 2, **dadurch gekennzeichnet, daß** die beim Waschen des Reduktionsgases aus der Einschmelzvergasungszone (2) anfallenden, zu agglomerierenden Schlämme gemeinsam mit den beim Waschen des Topgases aus der Reduktionszone (2) anfallenden, zu agglomerierenden Schlämmen weiterbehandelt werden.

4. Verfahren nach einem der Ansprüche 1 bis 3, **dadurch gekennzeichnet, daß** das gereinigte Topgas aus der Reduktionszone (2) nach dem Waschen einer CO₂-Eliminierung unterzogen wird und als zumindest weitgehend CO₂-freies Reduktionsgas mindestens einer weiteren Reduktionszone (32) zur Direktreduktion von Metallerz, insbesondere von Eisenerz oder Pellets (31), zugeführt wird, nach Umsetzung mit dem Metallerz in der weiteren Reduktionszone (32) als Exportgas abgezogen und in einem Wäscher (36) gereinigt wird und daß die beim Waschen des Exportgases aus der weiteren Reduktionszone (32) anfallenden Schlämme zumindest teilweise agglomeriert werden und das so gebildete Agglomerat in die erste Reduktionszone (2) rezirkuliert wird.

5. Verfahren nach Anspruch 4, **dadurch gekennzeichnet, daß** die beim Waschen des Exportgases aus der weiteren Reduktionszone (32) anfallenden, zu agglomerierenden Schlämme gemeinsam mit den beim Waschen des Topgases aus der ersten Reduktionszone (2) anfallenden und/oder gemeinsam mit den beim Waschen des Reduktionsgases aus der Einschmelzvergasungszone (12) anfallenden, zu agglomerierenden Schlämmen weiterbehandelt werden.

6. Verfahren nach einem der Ansprüche 1 bis 5, **dadurch gekennzeichnet, daß** die zu agglomerierenden Schlämme zunächst auf einen Restfeuchtegehalt entwässert werden.

7. Verfahren nach einem der Ansprüche 1 bis 6, **dadurch gekennzeichnet, daß** den zu agglomerierenden Schlämmen oxidische Stäube (23), gegebenenfalls Kohlestaub (24) und Branntkalk (26) zugesetzt werden.

8. Verfahren nach einem der Ansprüche 1 bis 7, **dadurch gekennzeichnet, daß** die zu agglomerierenden Schlämme in einem zweistufigen kontinuierlichen Verfahren mit oxidischen Stäuben (23), gegebenenfalls Kohlestaub (24) und Branntkalk (26) gemischt und anschließend granuliert werden.

9. Verfahren nach Anspruch 7 oder 8, **dadurch gekennzeichnet, daß** oxidische Stäube aus der Gießhallenentstaubung eines Hüttenwerkes eingesetzt werden.

10. Verfahren nach Anspruch 7 oder 8, **dadurch gekennzeichnet, daß** oxidische Stäube aus einer Anlage zur Durchführung des Verfahrens gemäß einem der Ansprüche 1 bis 8 bzw. aus der Entstaubungsanlage eines Elektroofens eines der Einschmelzvergasungszone (12) und/oder der weiteren Reduktionszone (32) nachgeschalteten Stahlwerks, eingesetzt werden.

11. Verfahren nach einem der Ansprüche 1 bis 10, **dadurch gekennzeichnet, daß** die Agglomerate bzw. Granulate vor dem Rezirkulieren in die Reduktionszone (2) getrocknet werden.

12. Anlage zur Herstellung von flüssigem Roheisen (13) oder flüssigen Stahlvorprodukten aus von Eisenerz (4), vorzugsweise in Stück- und/oder Pelletform, und gegebenenfalls Zuschlägen (5) gebildeten Einsatzstoffen, mit einem Reduktionsreaktor (1) für Eisenerz, einem Einschmelzvergaser (6), einer den Einschmelzvergaser (6) mit dem Reduktionsreaktor (1) verbindenden Zuleitung (7) für ein im Einschmelzvergaser (6) gebildetes Reduktionsgas, einer den Reduktionsreaktor (1) mit dem Einschmelzvergaser (6) verbindenden Förderleitung (17) für das im Reduktionsreaktor (1) gebildete Reduktionsprodukt, mit einer vom Reduktionsreaktor (1) ausgehenden, mit einem Wäscher (19) versehenen Topgas-Ableitung (18), mit in den Einschmelzvergaser (6) mündenden Zuleitungen (9,11) für Kohlenstoffträger (10) und sauerstoffhältige Gase und einem am Einschmelzvergaser (6) vorgesehenen Abstich (15,16) für Roheisen (13) und Schlacke (14) und mit einer aus dem Wäscher (19) zu einer Einrichtung (25a, 25b) zum Agglomerieren von zumindest einem Teil der im Wäscher (19) anfallenden Schlämme führenden Schlammableitung (21), **dadurch gekennzeichnet, daß** die Einrichtung (25a, 25b) zum Agglomerieren der Schlämme leitungsmäßig mit dem Reduktionsreaktor (1) verbunden ist.

13. Anlage nach Anspruch 12, **dadurch gekennzeichnet, daß** in der in den Reduktionsreaktor (1) mündenden Reduktionsgas-Zuleitung (7) ein zweiter Wäscher (8) für zumindest eine Teilmenge des Reduktionsgases vorgesehen ist, von dem eine Schlammableitung zu einer Einrichtung zum Agglomerieren (25a, 25b) von zumindest einem Teil der im zweiten Wäscher (8) anfallenden Schlämme führt, welche Einrichtung (25a, 25b) leitungsmäßig mit dem Reduktionsreaktor (1) verbunden ist.

14. Anlage nach Anspruch 13, **dadurch gekennzeichnet, daß** die dem zweiten Wäscher (8) zugeordnete Schlammableitung leitungsmäßig mit der dem ersten Wäscher (19) zugeordneten Schlammableitung (21) verbunden ist.

15. Anlage nach einem der Ansprüche 12 bis 14, **dadurch gekennzeichnet, daß** mindestens ein weiterer Reduktionsreaktor (30) zur Aufnahme von Metallerz, insbesondere von weiterem Eisenerz oder Pellets (31), mit einer Reduktionsgas-Zuleitung, mit einer mit einem dritten Wäscher (36) versehenen Exportgas-Ableitung (35) und mit einer Austragsvorrichtung (34) für das in diesem Reduktionsreaktor (30) gebildete Reduktionsprodukt vorgesehen ist, wobei die Topgas-Ableitung (18) des ersten Reduktionsreaktors in eine CO₂-Eliminierungsanlage (29) mündet, von der die Reduktionsgas-Zuleitung des weiteren Reduktionsreaktors (30) ausgeht und in den weiteren Reduktionsreaktor (30) mündet und wobei eine Schlammableitung (38) aus dem dritten Wäscher (36) zu einer Einrichtung (25a, 25b) zum Agglomerieren von zumindest einem Teil der im dritten Wäscher (36) anfallenden Schlämme führt, welche Einrichtung (25a, 25b) leitungsmäßig mit dem ersten Reduktionsreaktor (1) verbunden ist.

16. Anlage nach Anspruch 15, **dadurch gekennzeichnet, daß** die dem dritten Wäscher (36) zugeordnete Schlammableitung (38) leitungsmäßig mit der dem ersten und/oder zweiten Wäscher (19, 8) zugeordneten Schlammableitung (21) verbunden ist.

17. Anlage nach einem der Ansprüche 12 bis 16, **dadurch gekennzeichnet, daß** die dem ersten, zweiten und/oder dritten Wäscher zugeordnete(n) Schlammableitung(en) (21, 38) vor der (den) Einrichtung(en) (25a, 25b) zum Agglomerieren der Schlämme zu (einer) Schlammentwässerungseinrichtung(en) (22) führt (führen).

18. Anlage nach Anspruch 17, **dadurch gekennzeichnet, daß** die Schlammentwässerungseinrichtung(en) (22) als Dekanterzentrifuge(n) ausgebildet ist (sind).

19. Anlage nach einem der Ansprüche 12 bis 18, **dadurch gekennzeichnet, daß** die Einrichtung(en) (25a, 25b) zum Agglomerieren der Schlämme als zweistufige Misch- und Granuliereinrichtung(en) ausgebildet ist (sind).

20. Anlage nach einem der Ansprüche 12 bis 19, **dadurch gekennzeichnet, daß** die Einrichtung(en) (25a, 25b) zum Agglomerieren der Schlämme über (eine) Trocknungseinrichtung(en) (28) mit dem ersten Reduktionsreaktor (1) leitungsmäßig verbunden ist (sind).

## Claims

1. Method of producing molten pig iron (13) or molten primary steel products from charging substances formed of iron ore (4), preferably in the shape of lumps and/or pellets, and optionally of fluxes (5), wherein the charging substances are directly reduced to sponge iron in a reduction zone (2), the sponge iron is charged into a melt-down gasifying zone (12) and, there, is melted under the supply of carbon carriers (10) and an oxygen-containing gas, wherein a CO- and H₂-containing reducing gas is generated, is withdrawn from the melt-down gasifying zone (12) and introduced into the reduction zone (2), is reacted there and is withdrawn as a top gas, and wherein the top gas is subjected to scrubbing and the sludges thus separated are at least partially agglomerated, **characterized in that** the agglomerate thus formed is recirculated into the reduction zone (2), preferably only into the reduction zone (2).

2. Method according to Claim 1, **characterized in that** at least a partial amount of the reducing gas that exits the melt-down gasifying zone (12) is scrubbed, the sludges thus obtained are at least partially agglomerated and the agglomerate thus formed is recirculated into the reduction zone (2).

3. Method according to Claim 2, **characterized in that** the sludges that are obtained in the scrubbing of the reducing gas from the melt-down gasifying zone (2) and that have to be agglomerated are subjected to further treatment together with the sludges obtained in the scrubbing of the top gas from the reduction zone (2) that have to be agglomerated.

4. Method according to one of Claims 1 to 3, **characterized in that**, after scrubbing, the purified top gas from the reduction zone (2) is subjected to CO₂ elimination and as an at least largely CO₂-free reducing gas is conducted to at least one further reduction zone (32) serving for the direct reduction of metal ore, particularly of iron ore or pellets (31), after reacting with the metal ore in the further reduction zone (32) is withdrawn as an export gas and purified in a scrubber (36) and that the sludges obtained in the scrubbing of the export gas from the further reduction zone (32) are at least partially agglomerated and the agglomerate thus formed is recirculated into the first reduction zone (2).

5. Method according to Claim 4, **characterized in that** the sludges that arise in the scrubbing of the export gas from the further reduction zone (32) and that have to be agglomerated are subjected to further treatment together with the sludges that arise in the scrubbing of the top gas from the first reduction zone (2) and/or together with the sludges that arise in the scrubbing of the reducing gas from the melt-down gasifying zone (12) and that have to be agglomerated.

6. Method according to one of Claims 1 to 5, **characterized in that** the sludges that have to be agglomerated are first of all dewatered to a residual moisture content.

7. Method according to one of Claims 1 to 6, **characterized in that** oxidic dusts (23), optionally coal dust (24) and calcined lime (26), are added to the sludges that have to be agglomerated.

8. Method according to one of Claims 1 to 7, **characterized in that** the sludges that have to be agglomerated are mixed with oxidic dusts (23), optionally coal dust (24), and calcined lime (26) in a two-step continuous process and subsequently are granulated.

9. Method according to Claim 7 or 8, **characterized in that** oxidic dusts from the pouring-bay dust collection of a metallurgical plant are utilized.

10. Method according to Claim 7 or 8, **characterized in that** oxidic dusts from a plant for carrying out the method according to one of claims 1 to 8 or from the dedusting plant of an electric furnace of a steelworks connected downstream of the melt-down gasifying zone (12) and/or the further reduction zone (32).

11. Method according to one of Claims 1 to 10, **characterized in that** the agglomerates or granules, respectively, are dried prior to recirculation into the reduction zone (2).

12. Plant for the production of molten pig iron (13) or molten primary steel products from charging substances formed of iron ore (4), preferably in the shape of lumps and/or pellets, and optionally of fluxes (5), which plant comprises a reduction reactor (1) for iron ore, a melter gasifier (6), a feed duct (7) for a reducing gas generated in the melter gasifier (6), which feed duct connects the melter gasifier (6) with the reduction reactor (1), a conveying duct (17) for the reduction product generated in the reduction reactor (1), which conveying duct connects the reduction reactor (1) with the melter gasifier (6), a top gas discharge duct (18) departing from the reduction reactor (1) and equipped with a scrubber (19), feed ducts (9,11) for carbon carriers (10) and oxygen-containing gases that open into the melter gasifier (6) and a tap (15,16) for pig iron (13) and slag (14) that is provided at the melter gasifier (6) and a sludge discharge duct (21) that from the scrubber (19) leads to a means (25a, 25b) for agglomerating at least a portion of the sludges arising in the scrubber (19), **characterized in that** the means (25a, 25b) for agglomerating the sludges is flow-connected with the reduction reactor (1).

13. Plant according to Claim 12, **characterized in that** in the reducing-gas feed duct (7) which runs into the reduction reactor (1) there is provided a second scrubber (8) for at least a partial amount of the reducing gas, from which scrubber a sludge discharge duct leads to a means for agglomerating (25a, 25b) at least a portion of the sludges which arise in the second scrubber (8), said means (25a, 25b) being flow-connected with the reduction reactor (1).

14. Plant according to Claim 13, **characterized in that** the sludge discharge duct associated with the second scrubber (8) is flow-connected with the sludge discharge duct (21) associated with the first scrubber (19) .

15. Plant according to one of Claims 12 to 14, **characterized in that** at least one further reduction reactor (30) is provided for receiving metal ore, in particular further iron ore or pellets (31), which reactor comprises a reducing-gas feed duct, an export-gas discharge duct (35) equipped with a third scrubber (36), and a discharging device (34) for the reduction product formed in this reduction reactor (30), wherein the top-gas discharge duct (18) of the first reduction reactor runs into a CO₂ elimination plant (29) from which the reducing-gas feed duct of the further reduction reactor (30) departs and runs into the further reduction reactor (30), and wherein a sludge discharge duct (38) from the third scrubber (36) leads to a means (25a, 25b) for agglomerating at least a portion of the sludges arising in the third scrubber (36), which means (25a, 25b) is flow-connected with the first reduction reactor (1).

16. Plant according to Claim 15, **characterized in that** the sludge discharge duct (38) associated with the third scrubber (36) is flow-connected with the sludge discharge duct (21) associated with the first and/or second scrubber (19, 8).

17. Plant according to one of Claims 12 to 16, **characterized in that** the sludge discharge duct(s) (21, 38) associated with the first, second and/or third scrubber lead(s) to (a) sludge dewatering means (22) prior to reaching the means (25a, 25b) for agglomerating the sludges.

18. Plant according to Claim 17, **characterized in that** the sludge dewatering means (22) is (are) constructed as (a) decanter centrifuge(s).

19. Plant according to one of Claims 12 to 18, **characterized in that** the means (25a, 25b) for agglomerating the sludges is (are) constructed as (a) two-step mixing and granulating means.

20. Plant according to one of Claims 12 to 19, **characterized in that** the means (25a, 25b) for agglomerating the sludges (is) are flow-connected with the first reduction reactor (1) via (a) drying means (28) .

## Revendications

1. Procédé de fabrication de fer brut liquide (13) ou de produits liquides d'acier à partir de minerai de fer (4), de préférence sous forme de morceaux et/ou de pellets et, le cas échéant, à partir de substances de charges formées d'additifs (5), les substances de charge étant directement réduites, dans une zone de réduction (2), en mousse de fer, la mousse de fer étant chargée dans une zone de gazéificateur à fusion (12) et y étant soumis à une fusion avec apport de vecteurs de carbone (10) et d'un gaz contenant de l'oxygène, un gaz de réduction contenant H₂ et CO₂ étant produit, étant retiré de la zone de gazéificateur à fusion (12) et étant conduit dans la zone de réduction (2), y entrant en réaction et étant prélevé en tant que gaz supérieur, et le gaz supérieur étant soumis à un lavage et les boues ainsi déposées étant au moins partiellement agglomérées, **caractérisé en ce que** l'agglomérat ainsi formé, dans la zone de réduction (2), est remis en circulation, de préférence, exclusivement, dans la zone de réduction (2).

2. Procédé selon la revendication 1, **caractérisé en ce qu'**au moins une quantité partielle du gaz de réduction sortant de la zone de gazéificateur à fusion (12) est lavée, **en ce que** les boues ainsi formées sont au moins partiellement agglomérées et **en ce que** l'agglomérat ainsi formé est remis en circulation dans la zone de réduction (2).

3. Procédé selon la revendication 2, **caractérisé en ce que** les boues à agglomérer, qui se forment lors du lavage du gaz de réduction en provenance de la zone de gazéificateur à fusion (12) subissent un traitement ultérieur conjointement aux boues à agglomérer, qui se forment lors du lavage du gaz supérieur en provenance de la zone de réduction (2).

4. Procédé selon l'une quelconque des revendications 1 à 3, **caractérisé en ce que** le gaz supérieur purifié en provenance de la zone de réduction (2) est soumis, après le lavage, à une élimination du CO₂ et est conduit, en tant que gaz de réduction, exempt, tout au moins, dans une large mesure, de CO₂, au moins à une zone de réduction supplémentaire (32) en vue de la réduction directe du minerai métallique, en particulier du minerai de fer ou de pellets (31), est prélevé après réaction avec le minerai métallique dans la zone de réduction supplémentaire (32) en tant que gaz d'exportation et est purifié dans un dispositif de lavage (36) et **en ce que** les boues se formant lors du lavage du gaz d'exportation en provenance de la zone de réduction supplémentaire (32) sont au moins partiellement agglomérées et **en ce que** l'agglomérat ainsi formé est remis en circulation dans la première zone de réduction (2).

5. Procédé selon la revendication 4, **caractérisé en ce que** les boues à agglomérer, se formant lors du lavage du gaz d'exportation en provenance de la zone de réduction supplémentaire (32), sont soumises à un traitement ultérieur, conjointement aux boues à agglomérer, se formant lors du lavage du gaz supérieur en provenance de la première zone de réduction (2) et/ou conjointement, lors du lavage du gaz de réduction en provenance de la zone de gazéificateur à fusion (12) .

6. Procédé selon l'une quelconque des revendications 1 à 5, **caractérisé en ce que** les boues à agglomérer sont tout d'abord déshydratées à une teneur résiduelle en humidité.

7. Procédé selon l'une quelconque des revendications 1 à 6, **caractérisé en ce que** l'on ajoute aux boues à agglomérer des poussières oxydées (23), le cas échéant, de la poussière de charbon (24) et de la chaux vive (26).

8. Procédé selon l'une quelconque des revendications 1 à 7, **caractérisé en ce que** les boues à agglomérer sont mélangées dans un procédé continu à deux étapes à des poussières oxydées (23), le cas échéant, à de la poussière de charbon (24) et à de la chaux vive (26) et sont ensuite mises sous forme de granulés.

9. Procédé selon la revendication 7 ou 8,
**caractérisé en ce que** l'on utilise des poussières oxydées en provenance de la station de dépoussiérage d'une halle de coulée d'une usine sidérurgique.

10. Procédé selon la revendication 7 ou 8,
**caractérisé en ce que** l'on utilise les poussières oxydées en provenance d'une installation en vue de l'exécution du procédé, conformément à l'une des revendications 1 à 8, en provenance de l'installation de dépoussiérage d'un four électrique d'une usine sidérurgique, intercalée à la suite de la zone de gazéificateur à fusion (12) et/ou de la zone de réduction supplémentaire (32).

11. Procédé selon l'une quelconque des revendications 1 à 10, **caractérisé en ce que** les agglomérats ou les granulés sont séchés avant la remise en circulation dans la zone de réduction (2).

12. Installation de fabrication de fer brut liquide (13) ou de produits liquides en acier à partir de minerai de fer (4), de préférence sous la forme des morceaux et/ou de pellets, et, le cas échéant, de substances de charge formées d'additifs (5), avec un réacteur de réduction (1) pour le minerai de fer, un gazéificateur à fusion (6), un conduit d'amenée (7), reliant le gazéificateur à fusion (6) au réacteur de réduction (1) pour un gaz de réduction formé dans le gazéificateur à fusion (6), un conduit d'alimentation (17), reliant le réacteur de réduction (1) au gazéificateur à fusion (6), pour le produit de réduction formé dans le réacteur de réduction (1), avec un conduit de dérivation du gaz supérieur (18), sortant du réacteur de réduction (1), pourvu d'un dispositif de lavage (19), avec des conduits d'apport (9, 11) débouchant dans le gazéificateur à fusion (6), pour les vecteurs de charbon (10) et les gaz contenant de l'oxygène, et avec une percée de prélèvement (15, 16), prévue dans le gazéificateur à fusion (6), pour le fer brut (13) et les scories (14), et avec un conduit d'évacuation des boues (21), conduisant hors du dispositif de lavage (19) en direction d'un équipement (25a, 25b), en vue de l'agglomération d'au moins une partie des boues se formant dans le dispositif de lavage (19), **caractérisée en ce que** l'équipement (25a, 25b) en vue de l'agglomération des boues est relié, par l'intermédiaire de conduites, au réacteur de réduction (1) .

13. Installation selon la revendication 12,
**caractérisée en ce que** l'on prévoit, dans le conduit d'apport du gaz de réduction (7) débouchant dans le réacteur de réduction (1), un deuxième dispositif de lavage (8) pour au moins une quantité partielle du gaz de réduction, duquel un conduit d'évacuation des boues conduit à un équipement en vue de l'agglomération (25a, 25b) d'au moins une partie de boues se formant dans le deuxième dispositif de lavage (8), lequel équipement (25a, 25b) est relié, par l'intermédiaire de conduits, au réacteur de réduction (1).

14. Installation selon la revendication 13,
**caractérisée en ce que** le conduit d'évacuation de boues affecté au dispositif de lavage (8) est relié au conduit d'évacuation (21) affecté au premier dispositif de lavage (19).

15. Installation selon l'une quelconque des revendications 12 à 14, **caractérisée en ce que** l'on prévoit au moins un réacteur de réduction (30) supplémentaire en vue de la réception du minerai métallique, en particulier de minerai de fer ou de pellets supplémentaires (31), avec un conduit d'apport du gaz de réduction, avec un conduit d'évacuation du gaz d'exportation (35), pourvu d'un troisième dispositif de lavage (36), et avec un dispositif d'évacuation (34) pour le produit de réduction formé dans ce réacteur de réduction (30), le conduit d'évacuation du gaz supérieur (18) du premier réacteur de réduction débouchant dans une installation d'élimination du CO₂ (29), de laquelle le conduit d'apport du gaz de réduction du réacteur de réduction (30) supplémentaire émerge et débouche dans le réacteur de réduction (30) supplémentaire et un conduit de dérivation de boues (38) conduisant au troisième dispositif de lavage (36) vers un équipement (25a, 25b) en vue de l'agglomération d'au moins une partie des boues se formant dans le troisième dispositif de lavage (36), lequel équipement (25a, 25b) est relié, par l'intermédiaire de conduits, au réacteur de réduction (1) .

16. Installation selon la revendication 15,
**caractérisée en ce que** le conduit d'évacuation des boues (38) affecté au troisième dispositif de lavage (36) est relié, par l'intermédiaire de conduits, au conduit d'évacuation des boues (21), affecté au premier et/ou au deuxième dispositif de lavage (19, 8).

17. Installation selon l'une quelconque des revendications 12 à 16, **caractérisée en ce que** le ou les conduits d'évacuation des boues (21, 38),
affecté(s) au premier, deuxième et/ou troisième dispositif de lavage, de l'équipement ou des équipements (25a, 25b) en vue de l'agglomération des boues, conduit(conduisent) à un équipement (ou des équipements) de déshydratation des boues (22).

18. Installation selon la revendication 17,
**caractérisée en ce que** l'équipement ou les équipements de déshydratation des boues (22) est (sont) formée(s) en tant que centrifuges d'appareils de décantation.

19. Installation selon l'une quelconque des revendications 12 à 18, **caractérisée en ce que** l'équipement (ou les équipements) (25a, 25b) en vue de l'agglomération des boues est (sont) formé(s) en tant qu'équipement(s) de mélange et de formation de granulés à 2 étages.

20. Installation selon l'une quelconque des revendications 12 à 19, **caractérisée en ce que** l'équipement (ou les équipements) (25a, 25b) en vue de l'agglomération des boues est (sont) relié(s) à un premier réacteur de réduction (1), par l'intermédiaire d'un (ou de plusieurs) équipement(s) de séchage (28).
